# EUROPÄISCHE PATENTSCHRIFT

(11) **EP 1 738 157 B1**
(45) Veröffentlichungstag und Bekanntmachung des Hinweises auf die Patenterteilung: **03.01.2018**
(21) Anmeldenummer: 05735820.2
(22) Anmeldetag: 15.04.2005
(51) Int. Cl.: G01N 23/223

(54) **VORRICHTUNG FÜR DIE ELEMENTANALYSE**
DEVICE FOR THE ANALYSIS OF ELEMENTS
DISPOSITIF D'ANALYSE D'ELEMENTS

(30) Priorität: 17.04.2004 DE 102004019030
(43) Veröffentlichungstag der Anmeldung: 03.01.2007
(73) Patentinhaber: Katz, Elisabeth, 72226 Simmersfeld (DE)
(72) Erfinder: KLEIN, Albert, 72226 Simmersfeld (DE)
(74) Vertreter: Schön, Thilo
(86) Internationale Anmeldenummer: PCT/EP2005/003976
(87) Internationale Veröffentlichungsnummer: WO 2005/100963

(56) Entgegenhaltungen:
- WO-A-03/021244
- WO-A-2004/008128
- US-A- 5 721 759

## Beschreibung

### Technisches Gebiet der Erfindung

Die Erfindung betrifft eine Vorrichtung für die Elementanalyse nach dem Oberbegriff des Anspruchs 1.

Beispielsweise im Bereich des Bergwerks- und Hüttenwesens ist es häufig notwendig den Anteil bestimmter Elemente in einer Substanz fortlaufend (online) zu messen. Hierzu wird die Substanz auf einem Förderband oder ähnlichem an einer entsprechenden Messvorrichtung vorbeigeführt. Als Messmethode wird hierbei häufig Röntgenfluoreszenzspektroskopie eingesetzt. Die Messvorrichtung weist eine Anregungsquelle auf, die einen Messbereich auf dem Förderband mit fluoreszenzanregender Strahlung bestrahlt. Bei der fluoreszenzanregenden Strahlung handelt es sich zumeist um Gamma- oder Röntgenstrahlung. Die Messvorrichtung weist weiterhin einen Röntgenfluoreszenzdetektor auf, der die von der Substanz ausgehende Röntgenfluoreszenzstrahlung spektral mißt. Hieraus wird dann nach bekannten Methoden der Anteil bestimmter Elemente errechnet.

Bei der Anwendung dieser Messmethode treten insbesondere im industriellen Bereich verschiedene messtechnische Probleme auf. Das erste Problem ist, dass häufig leichte Elemente wie bspw. Aluminium gemessen werden sollen. Deren Röntgenfluoreszenzstrahlung ist jedoch relativ langwellig und wird deshalb nicht nur von Detektorfenstern sondern bereits von einigen Zentimetern Luft stark absorbiert. Mit diesem Problem zusammenhängend ist das zweite Problem, dass die Messumgebung häufig schmutzig und staubig ist, wodurch die Strahlungsdurchlässigkeit der Luft nochmals herabgesetzt wird, und sich sowohl Eintritts- als auch Austrittsfenster schnell mit einer absorbierenden Schicht überziehen. Ein drittes Problem besteht darin, dass die zu messenden Substanzen in manchen Anwendungsfällen relativ heiß sind und die Wärmestrahlung die Funktion des Röntgenfluoreszenzdetektors beeinträchtigt.

### Stand der Technik

Aus der WO 00/16078 ist eine gattungsgemäße Messvorrichtung bekannt, bei der zur Lösung des Problems der starken Luftabsorption vorgeschlagen wird, den Röntgenfluoreszenzdetektor nahe - innerhalb von 5 cm - an der Oberfläche der zu messenden Substanz anzuordnen. Mit dieser Maßnahme ist es zwar möglich die Luftabsorption zu minimieren, das Problem von strahlungsdämpfenden Staubablagerungen verbleibt jedoch. Weiterhin ist es mit einer Messvorrichtung, wie sie in dieser Schrift vorgeschlagen wird, überhaupt nicht oder nur mit sehr großen Schwierigkeiten möglich, heiße Substanzen zu messen, da aufgrund der großen Nähe des Röntgenfluoreszenzdetekors zur Oberfläche der Substanz die notwendige niedere Betriebstemperatur des Detektors nicht erreicht werden kann.

Die WO 2004/008128 A1 schlägt den Einsatz von Röntgenleitern in Form von Glaskapillaren vor, wobei diese mit Helium gefüllt sein können.

### Gegenstand der Erfindung

Hiervon ausgehend ist es Aufgabe der Erfindung eine gattungsgemäße Vorrichtung dahingehend weiterzubilden, dass sie auch zum Einsatz bei ungünstigen Umweltbedingungen geeignet ist. Insbesondere soll die Vorrichtung auch zur Messung in staubiger und schmutziger Umgebung und zur Messung von heißen Substanzen geeignet sein.

Diese Aufgabe wird durch eine Vorrichtung mit den Merkmalen des Anspruchs 1 gelöst.

Die Grundidee der Erfindung ist es, den Strahlengang der anregenden und/oder der Fluoreszenzstrahlung bis in die Nähe der Oberfläche der zu messenden Substanz in einem Rohr zu führen, das an dem dem Messbereich zugewandten Ende hin offen ist. Das Rohr wird mit Gas gespült, das in Richtung des Messbereichs austritt, so dass Staubablagerungen verhindert werden. Hierbei befinden sich Anregungsquelle und Röntgenfluoreszenzdetektor in einem äußeren Gehäuse. Die Anregungsquelle weist ein erstes Gehäuse mit einem Austrittsfenster und der Röntgenfluoreszenzdetektor weist ein zweites Gehäuse mit einem Eintrittsfenster auf. Das Rohr erstreckt sich vom Eintrittsfenster des zweiten Gehäuses in Richtung des Messbereichs und ist mit dem zweiten Gehäuse und mit dem äußeren Gehäuse im Wesentlichen dicht verbunden. Es ist am dem Messbereich zugewandten Ende offen und weist einen Anschluss zur Zuführung eines Spülgases ins Innere des Rohres auf.

Insbesondere wenn leichte Elemente gemessen werden sollen, wird vorzugsweise Helium als Spülgas eingesetzt, da die Absorption in Helium aufgrund seiner geringen Dichte wesentlich geringer ist als in Luft. In diesem Fall muss das Rohr nach unten hin offen sein und sollte vorzugsweise im Wesentlichen senkrecht angeordnet werden. Diese Anordnung hat den weiteren Vorteil, dass aufgrund der geringen Absorption des Heliums der Röntgenfluoreszenzdetektor relativ weit entfernt von der zu messenden Substanz angeordnet werden kann, so dass auch eine relativ hohe Temperatur der zu messenden Substanz unproblematisch ist. Ein weiterer Vorteil einer Anordnung des Röntgenfluoreszenzdetektors in relativ großem Abstand von der Oberfläche der zu messenden Substanz ist, dass sich aufgrund des quadratischen Abstandsgesetzes gewisse Schwankungen der Höhe der Oberfläche nur geringfügig auf die auf den Röntgenfluoreszenzdetekor auftreffende Intensität auswirken.

Bevorzugte Ausführungsformen der Erfindung ergeben sich aus den Unteransprüchen und den nun mit Bezug auf die Figuren näher dargestellten Ausführungsbeispielen. Hierbei zeigen:

### Kurzbeschreibung der Zeichnungen

- Figur 1: eine schematische Darstellung einer ersten Ausführungsform der Erfindung,
- Figur 2: eine schematische Darstellung einer zweiten Ausführungsform der Erfindung,
- Figur 3: die schematische Darstellung einer dritten Ausführungsform der Erfindung,
- Figur 4: die schematische Darstellung einer vierten Ausführungsform der Erfindung,
- Figur 5: die Ausführungsform aus Figur 2 mit einem zusätzlichen Material-sensor.

### Beschreibung bevorzugter Ausführungsformen

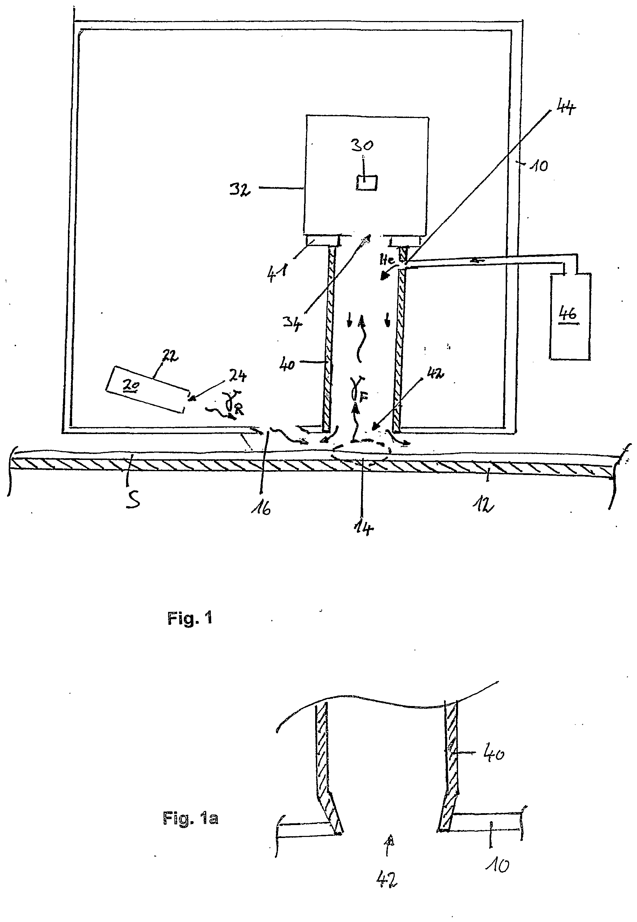

Figur 1 zeigt ein erstes Ausführungsbeispiel. Oberhalb des Förderbandes 12, auf den die zu messende Substanz S gefördert wird und in diesem Ausführungsbeispiel als Transportmittel dient, ist ein äußeres Gehäuse 10 angeordnet. In diesem äußerem Gehäuse 10 befindet sich eine als Anregungsquelle dienende sich in einem ersten Gehäuse 22 befindende Röntgenröhre 20. Durch ein Austrittsfenster 24 des ersten Gehäuses 22 tritt ein Röntgenstrahl γ_{R} und ist so ausgerichtet, dass er auf den Messbereich 14 trifft. Da das äußere Gehäuse 10 in der Regel relativ dickwandig bspw. aus Edelstahl aufgebaut ist, weist die Gehäuseunterseite ein Austrittsloch 16 für die Röntgenstrahlung auf. Um zu verhindern, dass Staub und andere Partikel ins Innere des äußeren Gehäuses 10 eindringen, ist das Austrittsloch mit einem Fenster, beispielsweise aus Berylliumfolie abgedeckt.

Durch die Bestrahlung entsteht im Messbereich 14 Röntgenfluoreszenzstrahlung γ_{F}, welche vom sich ebenfalls im äußeren Gehäuse 10 befindenden Röntgenfluoreszenzdetektor 30 gemessen wird. Vom zweiten Gehäuse 32 des Röntgenfluoreszenzdetektors 30 erstreckt sich ein erstes Rohr 40 senkrecht nach unten und ist an seiner unteren Stirnseite offen. Das erste Rohr 40 ist über einen Gummibalg 41 mit dem zweitem Gehäuse 32 des Röntgenfluoreszenzdetektors 30 verbunden. Diese Verbindung ist im Wesentlichen gasdicht. Die Verwendung eines elastischen Gummibalgs dient der mechanischen Entkopplung zwischen dem ersten Rohr 40 und dem Röntgenfluoreszenzdetektors 30. Dies ist notwendig, da die meisten Röntgenfluoreszenzdetektoren mechanisch relativ empfindlich sind. An seinem unteren Ende ist das erste Rohr 40 mit dem äußerem Gehäuse 10 dicht verbunden.

Die im Messbereich 14 entstehende Röntgenfluoreszenzstrahlung gelangt durch die Rohröffnung 42 in das erste Rohr 40 und gelangt durch dieses bis zum Eintrittsfenster 34, wo es in den Röntgenfluoreszenzdetektor 30 gelangt. Das Eintrittsfenster 34 kann hierbei je nach verwendetem Detektor offen sein oder beispielsweise aus einer Folie bestehen.

Um zu verhindern, dass Staub, Asche oder ähnliches die Röntgenfluoreszenzstrahlung auf ihrem Weg vom Messbereich 14 zum Röntgenfluoreszenzdetektor 30 absorbiert, wird das erste Rohr 40 mit Helium gespült. Hierzu weist das erste Rohr 40 einen Anschluss 44 auf, der das Rohr 40 mit einer Heliumquelle 46, die zweckmäßigerweise außerhalb des äußeren Gehäuses 10 angeordnet ist, verbindet. Der Anschluss 44 befindet sich vorzugsweise in einem oberen Abschnitt des Rohrs 40 in der Nähe des Eintrittfensters 34. Das Helium strömt vom Anschluss 44 in das Rohr 40, dort nach unten, und verlässt das erste Rohr 40 durch die Rohröffnung 42. Um maximale Intensität erzielen zu können, sollte der Durchmesser des Rohres mindestens dem Durchmesser der messempfindlichen Fläche des verwendeten Detektors entsprechen. Vorzugsweise hat das Rohr einen Innendurchmesser von 10 bis 50mm. Ein relativ großer Durchmesser des Rohres ist auch wichtig, um den Anschluss für das Spühlgas anbringen zu können. Um an der Rohröffnung große Strömungsgeschwindigkeiten des Spühlgases zu erreichen, kann es sinnvoll sein, das Rohr zur Rohröffnung hin zu verjüngen (Figur 1a).

Weiterhin ist es möglich, das Austrittsloch 16 unmittelbar angrenzend zur Rohröffnung 42 anzuordnen, so dass auch das Austrittsloch 16 von Helium umspült wird. Es kann hierbei sinnvoll sein, das Rohr 40 zur Rohröffnung 42 hin aufzuweiten. Insbesondere ist es in einem solchen Fall günstig, den Bereich der Rohröffnung 42 derart asymmetrisch auszugestalten, dass aus der Rohröffnung 42 austretendes Spühlgas in Richtung des Austrittslochs 16 gelenkt wird.

Da Helium wesentlich leichter als Luft ist, befindet sich ständig eine Heliumsäule im ersten Rohr 40, so dass das Eindringen von Luft verhindert wird. Somit hat der Einsatz der Heliumspülung mehrere Effekte: zum einem wird keine Fensterfolie, oder nur eine sehr dünne Fensterfolie am Eintrittsfenster 34 des Röntgenfluoreszenzdetektors 30 benötigt. Hierdurch ist die Absorption durch die Messvorrichtung selbst sehr gering. Weiterhin wird sowohl das Ablagern von Staub, Asche und dergleichen auf Fensterfolie, als auch das Vorhandensein von Staub, Asche und dergleichen in einem großen Teil des Strahlengangs der Röntgenfluoreszenzstrahlung verhindert. Dies mindert nicht nur die Gesamtabsorption, sondern verhindert auch Absorptionsschwankung, die die Messung in schwer reproduzierbarer Art und Weise beeinträchtigen können. Schließlich ist ein großer Teil des Strahlengangs frei von Luft, was ebenfalls zu einer starken Verminderung der Gesamtabsorption beiträgt. Weiterhin wird die in manchen Anwendungsfällen störende Spektralabsorption mancher Luftbestandteile, zum Beispiel von Argon, stark vermindert. Dieser Effekt kann insbesondere dann wichtig sein, wenn im Periodensystem benachbarte Elemente gemessen werden sollen.

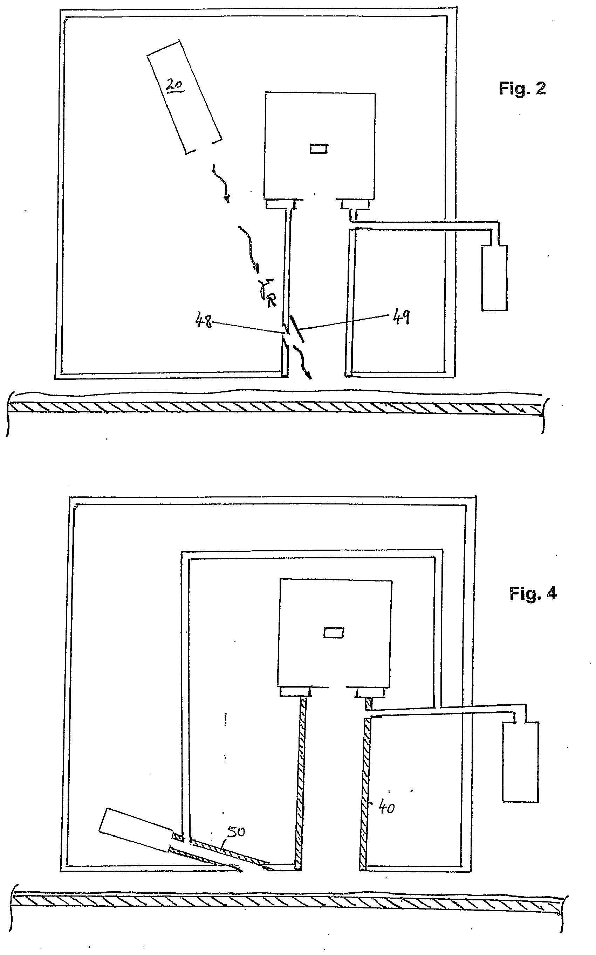

Beim im Figur 1 dargestellten Ausführungsbeispiel können sich Partikel auf der Abdeckung des Austrittslochs 16 ablagern. Dies ist hinsichtlich der benötigten Intensität aufgrund der zumeist relativ hohen Energie der verwendeten Röntgenstrahlen zwar nicht ganz so kritisch, kann jedoch zu einer Verfälschung des Messergebnisses führen. In dem im Figur 2 dargestellten Ausführungsbeispiel verläuft der Strahlengang der anregenden Röntgenstrahlung deshalb durch die Wandung des ersten Rohres 40 hindurch. Hierbei ist es einerseits möglich das erste Rohr 40 aus einem Material zu fertigen, das für die anregende Röntgenstrahlung durchlässig ist. Hier bietet sich bspw. Gummi an, das weiterhin den Vorteil hat, dass es auch ohne Zwischenschaltung eines speziellen Gummibalgs keine Schwingungen auf den Röntgenfluoreszenzdetektor 30 überträgt. Eine andere Möglichkeit ist in Figur 2 dargestellt und besteht darin, eine Öffnung 48 in der Wandung des ersten Rohres 40 vorzusehen, durch die die anregende Röntgenstrahlung in das erste Rohr 40 eintritt. Um eine Leckage des Heliums durch diese Öffnung 48 zu verhindern, kann die Öffnung 48 mit einem Fenster, beispielsweise aus Berylliumfolie abgedeckt sein. Zur Minimierung des Messuntergrundes kann als Fenster auch ein Filter vorgesehen sein, das nur für Photonen oberhalb einer Grenzenergie durchlässig ist. Um Streueffekte weiter zu minimieren ist oberhalb der Öffnung 48 vorzugsweise eine Blende 49 angeordnet, die beispielsweise aus Zirkonium bestehen kann. Als Alternative zu dem in Figur 2 Gezeigten ist es auch möglich die Öffnung 48 unmittelbar am Rohrende anzuordnen, so dass sie sich als Aussparung vom offenen Rohrende in die Rohrwandung hinein erstreckt. Es ist weiterhin möglich, die Öffnung 48 und das Austrittsfenster 24 der Röntgenröhre mit einem Röntgenleiter zu verbinden.

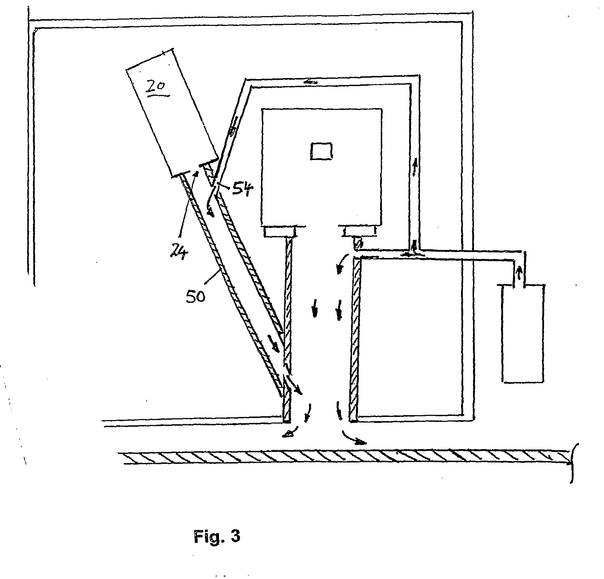

Im in Figur 3 gezeigten Ausführungsbeispiel befindet sich nicht nur der größte Teil des Strahlengangs der Röntgenfluoreszenzstrahlung sondern auch der größte Teil des Strahlengangs der anregenden Röntgenstrahlung innerhalb eines heliumgespülten Rohres. Wie im in Figur 2 gezeigten Ausführungsbeispiel tritt die von der Röntgenröhre 20 kommende Röntgenstrahlung durch die Öffnung 48 in das erste Rohr 40 ein. Zwischen dieser Öffnung 48 und dem Austrittsfenster 24 der Röntgenröhre 20 befindet sich das zweite Rohr 50, das über einen weiteren Anschluss 54 ebenfalls an die Heliumquelle 46 angeschlossen ist. Hierdurch können in manchen Fällen störende Luftabsorptionen verhindert werden. Als Alternative zum in Figur 3 gezeigten wäre es auch denkbar erstes und zweites Rohr völlig getrennt zu halten, wie dies in Figur 4 gezeigt ist.

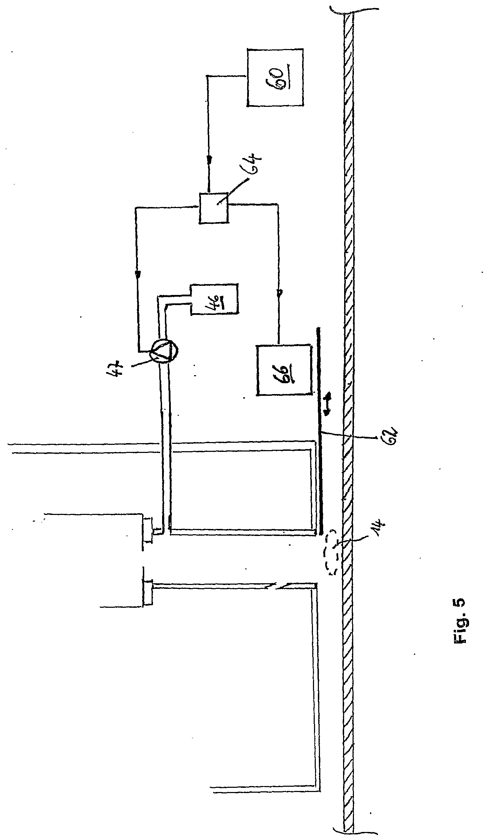

Um die Betriebskosten so gering wie möglich zu halten, sollte eine Heliumspülung des Rohres oder der Rohre nur erfolgen, wenn auch aktuell gemessen wird. Wie in Figur 5 dargestellt, wird deshalb vorgeschlagen stromauf des Messbereichs 14 ein Materialsensor 60 vorzusehen, welcher detektiert, ob sich zu messende Substanz auf dem Förderband befindet. Der Materialsensor 60 gibt seine Signale an das Steuergerät 64 weiter. Wird keine Substanz mehr auf dem Förderband detektiert, so wird die Messung gegebenenfalls mit gewissem Zeitverzug beendet und das Ventil 47 geschlossen. Um zu verhindern, dass in der Zeit, in der keine Heliumspülung stattfindet, Schmutz in das erste Rohr 40 gelangt, ist an der Rohröffnung 42 ein von einem Motor 66 angetriebenen Shutter 62 vorgesehen, der das Rohrende verschließt, wenn das Ventil 47 geschlossen wird.

Wird nun wieder Substanz auf den Förderband 12 detektiert, werden Shutter62 und Ventil 47 geöffnet. Hierdurch wird das erste Rohr 40 vorgespült, bis die Substanz den Messbereich 14 erreicht und die Messung beginnt bzw. fortgesetzt wird.

In den hier beschriebenen Ausführungsbeispielen liegt das Hauptaugenmerk auf der Verminderung einer Absorption der Röntgenfluoreszenzstrahlung. Dies wird in den meisten Anwendungsfällen zwar der wichtigste Punkt sein, das hier beschriebene Prinzip der "offenen Gasspühlung" kann jedoch beispielsweise ausschließlich auch für den Strahlengang der anregenden Strahlung verwendet werden.

### Bezugszeichen liste

- 10: äußeres Gehäuse
- 12: Förderband
- 14: Messbereich
- 16: Austrittsloch
- 20: Röntgenröhre
- 22: erstes Gehäuse
- 24: Austrittsfenster
- 30: Röntgenfluoreszenzdetektor
- 32: zweites Gehäuse
- 34: Eintrittsfenster
- 40: erstes Rohr
- 41: Gummibalg
- 42: Rohröffnung
- 44: Anschluss
- 46: Heliumquelle
- 47: Ventil
- 48: Öffnung
- 49: Blende
- 50: zweites Rohr
- 54: weiterer Anschluss
- 60: Materialsensor
- 62: Shutter
- 64: Steuergerät
- 66: Motor
- S: Substanz

## Patentansprüche

1. Vorrichtung für die Elementanalyse mit:
- einem einen Messbereich (14) aufweisendes Transportmittel zum Transport der zu messenden Substanz (S),
- einem äußeren Gehäuse (10),
- wenigstens einer Anregungsquelle mit einem sich in einem ersten Gehäuse (22) befindenden Austrittsfenster (24), wobei die Anregungsquelle so ausgerichtet ist, dass fluoreszenzanregende Strahlung auf den Messbereich (14) trifft, wobei das erste Gehäuse im äußeren Gehäuse angeordnet ist,
- wenigstens ein auf den Messbereich (14) ausgerichteter Röntgenfluoreszenzdetektor (30) mit einem sich in einem zweiten Gehäuse (32) befindenden Eintrittsfenster (34), wobei das zweite Gehäuse im äußeren Gehäuse angeordnet ist,
**dadurch gekennzeichnet, dass** sich vom Eintrittsfenster (34) ein Rohr (40) in Richtung des Messbereichs erstreckt, das mit dem zweiten Gehäuse (32) und mit dem äußeren Gehäuse im wesentlichen dicht verbunden und am dem Messbereich zugewandten Ende offen ist, und einen Anschluss (44) zur Zuführung eines Spülgases ins Innere des Rohres aufweist, wobei der Innendurchmesser des Rohres (40) wenigstens so groß wie der Durchmesser der messempfindlichen Fläche des Röntgenfluoreszenzdetektors (30) ist.

2. Vorrichtung nach Anspruch 1, **dadurch gekennzeichnet, dass** bei Betrieb Helium als Spülgas zugeführt wird.

3. Vorrichtung nach einem der vorangehenden Ansprüche, **dadurch gekennzeichnet, dass** die Anregungsquelle eine Röntgenröhre (20) oder eine Gammaquelle ist.

4. Vorrichtung nach einem der vorangehenden Ansprüche, **dadurch gekennzeichnet, dass** das Rohr mit einem elastischen Material vibrationsfrei an den Detektor gekoppelt ist.

5. Vorrichtung nach einem der vorangehenden Ansprüche, **dadurch gekennzeichnet, dass** das Rohr an seinem dem Messbereich zugewandten Ende verengt ist.

6. Vorrichtung nach einem der vorangehenden Ansprüche, **dadurch gekennzeichnet, dass** das Rohr wenigstens abschnittsweise für die fluoreszenzanregende Strahlung durchlässig ist.

7. Vorrichtung nach Anspruch 6, **dadurch gekennzeichnet, dass** in der Nähe des offenen Rohrendes eine Aussparung oder Öffnung (48) in der Rohrwandung vorgesehen ist.

8. Vorrichtung nach Anspruch 7, **dadurch gekennzeichnet, dass** die Öffnung schlitzförmig ausgebildet ist.

9. Vorrichtung nach einem der Ansprüche 7 oder 8, **dadurch gekennzeichnet, dass** die Aussparung beziehungsweise die Öffnung mit einem Fenster verschlossen ist, das für die fluoreszenzanregende Strahlung transparent ist.

10. Vorrichtung nach einem der Ansprüche 7 oder 8, **dadurch gekennzeichnet, dass** sich von der Aussparung beziehungsweise von der Öffnung ein zweites Rohr (50) zum Gehäuse der Anregungsquelle erstreckt.

11. Vorrichtung nach Anspruch 10, **dadurch gekennzeichnet, dass** das zweite Rohr über eine separate Gasspülung verfügt.

12. Vorrichtung nach einem der Ansprüche 7 bis 11, **dadurch gekennzeichnet, dass** das Rohr zwischen Aussparung beziehungsweise Öffnung und Röntgenfluoreszenzdetektor eine Blende (49) aufweist.

13. Vorrichtung nach einem der vorangehenden Ansprüche, **dadurch gekennzeichnet, dass** ein Materialsensor (60) und eine Absperreinrichtung (47) für die Gaszufuhr vorhanden ist, und dass bei Abwesenheit von zu messendem Material die Gaszufuhr abgesperrt wird.

14. Vorrichtung nach Anspruch 13, **dadurch gekennzeichnet, dass** das Rohr an seinem dem Messbereich zugewandten Ende ein Verschlusselement (62) trägt, das das Rohr bei abgesperrter Gaszufuhr verschließt.

15. Vorrichtung nach einem der Ansprüche 13 oder 14, **dadurch gekennzeichnet, dass** nach Ansprechen des Materialdetektors eine Vorspülphase eingeleitet wird, bevor die Messung beginnt.

16. Vorrichtung nach Anspruch 15, **dadurch gekennzeichnet, dass** der Materialsensor so weit vor dem Messbereich liegt, dass die Zeit, die zum Transport des Materials zum Messbereich benötigt wird, zur Durchführung des Vorspülens ausreicht.

17. Vorrichtung nach einem der vorangehenden Ansprüche, **dadurch gekennzeichnet, dass** das zum Röntgenfluoreszenzdetektor führende Rohr ganz oder teilweise aus Zirkonium besteht.

## Claims

1. Device for the analysis of elements, said device comprising:
- a transporting means for transporting the substance (S) to be measured, said transporting means having a measuring region (14),
- an outer housing (10),
- at least one excitation source with an exit window (24) being located in a first housing (22), wherein the excitation source is oriented such that the fluorescence-exciting radiation impinges on the measuring region (14), said first housing being located in said outer housing (10);
- at least one X-ray fluorescence detector (30) that is oriented toward the measuring region (14) and comprises an entrance window (34) being located in a second housing (32), said second housing being located in said outer housing,
**characterized in that** a tube (40) extends from the entrance window (34) in the direction of the measuring region, wherein this tube is essentially tightly connected to the second housing (32) and to the outer housing and is open at the end facing the measuring region, and is provided with a connection (44) for feeding a flushing gas into the tube, wherein the inner diameter of the tube (40) is at least as large as the diameter of the sensitive area of the X-ray fluorescence detector (30).

2. The device according to claim 1, **characterized in that** helium as flushing gas is fed in during the operation.

3. The device according to one of the preceding claims, **characterized in that** the excitation source is an X-ray tube (20) or a gamma-radiator.

4. The device according to one of the preceding claims, **characterized in that** the tube is connected to the detector with the aid of an elastic material in a vibration-free manner.

5. The device according to one of the preceding claims, **characterized in that** the tube is narrowed at its end facing the measuring region.

6. The device according to one of the preceding claims, **characterized in that** the tube is transparent for the fluorescence exciting radiation at least in sections.

7. The device according to claim 6, **characterized in that** near the open end of the tube a recess or opening (48) is provided in the tube wall.

8. The device according to claim 7, **characterized in that** the opening is slot-shaped.

9. The device according to one of the claims 7 or 8, **characterized in that** the recess or the opening is closed with a window which is transparent for the fluorescence-exciting radiation.

10. The device according to one of the claims 7 or 8, **characterized in that** a second tube (50) extends from the recess or the opening to the housing of the excitation source.

11. The device according to claim 10, **characterized in that** the second tube is provided with a separate gas flushing.

12. The device according to one of the claims 7 to 11, **characterized in that** the tube is provided with an aperture (49) between the recess or the opening and the X-ray fluorescence detector.

13. The device according to one of the preceding claims, **characterized in that** a material sensor (60) and a shut-off device (47) for the gas supply are provided and that the gas supply is shut off in the absence of a material to be measured.

14. The device according to claim 13, **characterized in that** the tube is provided with a closing element (62) at the end facing the measuring region, which closes the tube when the gas supply is cut off.

15. The device according to one of the claims 13 or 14, **characterized in that** a pre-flushing phase is initiated once the material detector responds and before the start of the measuring operation.

16. The device of claim 15, **characterized in that** the material sensor is located upstream of the measuring region to an extend that the time needed for the material to be transported to the measuring region is sufficient for performing the pre-flushing.

17. The device according to one of the preceding claims, **characterized in that** the tube leading to the X-ray fluorescence detector is composed totally or in part of zirconium.

## Revendications

1. Dispositif pour l'analyse d'élément comprenant :
- un moyen de transport présentant une zone de mesure (14) pour le transport de la substance (S) à mesurer,
- un boîtier externe (10),
- au moins une source d'excitation comprenant une fenêtre de sortie (24) située dans un premier boîtier (22), la source d'excitation étant orientée de sorte qu'un rayonnement d'excitation de fluorescence arrive sur la zone de mesure (14), le premier boîtier étant disposé dans le boîtier externe,
- au moins un détecteur de fluorescence X (30), dirigé sur la zone de mesure (14), comprenant une fenêtre d'entrée (34) située dans un deuxième boîtier (32), le deuxième boîtier étant disposé dans le boîtier externe,
**caractérisé en ce qu'**un tuyau (40) s'étend depuis la fenêtre d'entrée (34) en direction de la zone de mesure, est relié de manière sensiblement étanche avec le deuxième boîtier (32) et avec le boîtier externe, est ouvert à l'extrémité tournée vers la zone de mesure, et présente un raccord (44) pour acheminer un gaz de balayage à l'intérieur du tuyau, le diamètre intérieur du tuyau (40) étant au moins aussi grand que le diamètre de la face sensible à la mesure du détecteur de fluorescence X (30).

2. Dispositif selon la revendication 1, **caractérisé en ce que**, lors du fonctionnement, de l'hélium est acheminé comme gaz de balayage.

3. Dispositif selon l'une des revendications précédentes, **caractérisé en ce que** la source d'excitation est un tube à rayons X (20) ou une source Gama.

4. Dispositif selon l'une des revendications précédentes, **caractérisé en ce que** le tuyau est couplé sans vibration au détecteur, avec un matériau élastique.

5. Dispositif selon l'une des revendications précédentes, **caractérisé en ce que** le tuyau est rétréci à son extrémité tournée vers la zone de mesure.

6. Dispositif selon l'une des revendications précédentes, **caractérisé en ce que** le tuyau est au moins dans une zone perméable pour le rayonnement d'excitation de fluorescence.

7. Dispositif selon la revendication 6, **caractérisé en ce qu'**un évidement ou une ouverture (48) est prévu(e) dans la paroi du tuyau, à proximité de l'extrémité ouverte du tuyau.

8. Dispositif selon la revendication 7, **caractérisé en ce que** l'ouverture est réalisée en forme de fente.

9. Dispositif selon la revendication 7 ou 8, **caractérisé en ce que** l'évidement respectivement l'ouverture est fermée avec une fenêtre qui est transparente pour le rayonnement d'excitation de fluorescence.

10. Dispositif selon la revendication 7 ou 8, **caractérisé en ce qu'**un deuxième tuyau (50) s'étend de l'évidement respectivement de l'ouverture vers le boîtier de la source d'excitation.

11. Dispositif selon la revendication 10, **caractérisé en ce que** le deuxième tuyau dispose d'une alimentation en gaz de balayage séparée.

12. Dispositif selon l'une des revendications 7 à 11, **caractérisé en ce que** le tuyau présente un diaphragme (49) entre l'évidement respectivement l'ouverture et le détecteur de fluorescence X.

13. Dispositif selon l'une des revendications précédentes, **caractérisé en ce qu'**il est prévu un capteur produit (60) et un appareil d'obturation (47) pour l'alimentation en gaz, et **en ce que** l'alimentation en gaz est bloquée en l'absence de produit à mesurer.

14. Dispositif selon la revendication 13, **caractérisé en ce que** le tuyau porte sur son extrémité tournée vers la zone de mesure, un élément de fermeture (62) fermant le tuyau lors du blocage de l'alimentation en gaz.

15. Dispositif selon l'une des revendications 13 ou 14, **caractérisé en ce que**, après réponse du capteur produit, une phase de prébalayage est engagée, avant que la mesure commence.

16. Dispositif selon la revendication 15, **caractérisé en ce que** le capteur produit se situe à une distance telle en amont de la zone de mesure, que le temps nécessaire pour le transport du produit jusqu'à la zone de mesure suffise pour effectuer le prébalayage.

17. Dispositif selon l'une des revendications précédentes, **caractérisé en ce que** le tuyau menant au détecteur de fluorescence X est entièrement ou partiellement constitué de zirconium.
